# EUROPÄISCHE PATENTANMELDUNG

(11) **EP 1 191 212 A2**
(43) Veröffentlichungstag der Anmeldung: **27.03.2002**
(21) Anmeldenummer: 01121971.4
(22) Anmeldetag: 13.09.2001
(51) Int. Cl.: F02D 41/30, F02D 41/24, F02P 5/04, F02P 3/045

(54) **Verfahren zum Betrieb einer direkteinspritzenden Otto-Brennkraftmaschine**

(30) Priorität: 21.09.2000 DE 10046693
(71) Anmelder: DaimlerChrysler AG, 70567 Stuttgart (DE)
(72) Erfinder: Frey, Jürgen, 73728 Esslingen (DE); Hohner, Peter, Dr., 70599 Stuttgart (DE); Schenk, Jürgen, 73095 Albershausen (DE); Wilstermann, Hartung, 70619 Stuttgart (DE)

(57) **Zusammenfassung**

Die Erfindung betrifft ein Verfahren zum Betrieb einer direkteinspritzenden Otto-Brennkraftmaschine, wobei ein Injektor pro Zylinder Kraftstoff in den Brennraum einspritzt und mit separat zugeführter Verbrennungsluft ein brennbares Kraftstoff/Luft-Gemisch gebildet wird, welches nach Anlegen einer elektrischen Überschlagsspannung zwischen den in den Brennraum einragenden Elektroden einer Zündkerze durch Funkenschlag gezündet wird, wobei in weiten Kennfeldbereichen der Brennkraftmaschine ein Schichtladungsbetrieb durch Kraftstoffeinspritzung während des Verdichtungstaktes im Arbeitsspiel des jeweiligen Zylinders vorgesehen ist und wobei im Vollastbetrieb ein Homogenbetrieb vorgesehen ist, wobei eine Steuereinheit ein Steuersignal mit Aussage über die Funkendauer erzeugt und der Zündanlage zuführt.

Erfindungsgemäß ist vorgesehen, daß die Steuereinheit zwischen Homogen- und Schichtbetrieb unterscheidet, wobei unterschiedliche Kennfelder für Homogen- und Schichtbetrieb zur Steuerung der Funkendauer vorgesehen sind.

## Beschreibung

Die Erfindung betrifft ein Verfahren zum Betrieb einer direkteinspritzenden Otto-Brennkraftmaschine.

Ein gattungsgemäßes Verfahren zum Betrieb einer direkteinspritzenden Otto-Brennkraftmaschine ist beispielsweise aus der DE 197 30 908 A1 bekannt. Im Leerlaufbetrieb der Brennkraftmaschine wird eine geringe Menge Kraftstoff in den Brennraum eingespritzt, wodurch im Schichtladungsbetrieb eine lange Funkendauer von bis zu 5 Millisekunden zur Gemischzündung erforderlich ist. Das Gemisch an den Elektroden der Zündkerze ist aufgrund des geringen Kraftstoffeintrages am Rand der Gemischwolke für eine Zündung zu mager, wobei jedoch die Brennraumströmung beim Ladungswechsel vorübergehend zündfähiger Gemischanteile zwischen die Elektroden treibt, welche mit dem über die lange Funkendauer anhaltenden Zündfunken sicher entflammt wird. Mit zunehmender Last der Brennkraftmaschine erhöht sich die Einspritzmenge und eine entsprechend kürzere Funkendauer reicht zur Gemischentflammung aus. Im Vollastbetrieb der Brennkraftmaschine erfolgt eine homogene Gemischbildung, wobei aufgrund der guten Gemischaufbereitung nur entflammbares Gemisch zwischen den Elektroden vorliegt und eine minimale Funkendauer von etwa 0,1 Millisekunden zur Zündung ausreicht. Es ist eine Steuereinheit vorgesehen, die unter Zugrundelegung mindestens eines Betriebsparameters der Brennkraftmaschine ein Steuersignal mit Aussage über die Funkendauer erzeugt und der Zündanlage zuführt.

Bei dieser Art des Betriebs einer direkteinspritzenden Otto-Brennkraftmaschine ist von Nachteil, zwar bei Homogenbetrieb eine minimale Funkendauer von etwa 0,1 Millisekunden zur Zündung vorzusehen und bei Schichtladebetrieb eine lange Funkendauer zur Zündung vorzusehen, aber nicht unterschieden wird zwischen Homogen- und Schichtladebetrieb, so daß eine Einstellung der Funkenbrenndauer nicht sehr genau erfolgt.

Die Aufgabe der Erfindung ist daher, den Betrieb einer direkteinspritzenden Otto-Brennkraftmaschine so zu verbessern, daß sowohl bei Homogen- als auch bei Schichtladebetrieb eine optimale Entflammung erfolgt.

Erfindungsgemäß wird die Aufgabe durch die Merkmale des Anspruchs 1 gelöst. Vorteilhafte Aus- und Weiterbildungen des Erfindungsgegenstandes sind durch die Merkmale der Unteransprüche gekennzeichnet.

Ein wesentlicher Vorteil dieser Anordnung liegt darin, daß bei direkteinspritzenden Otto-Motoren eine optimale Entflammung erfolgt, indem die Funkendauer genau auf die herrschenden Verhältnisse im Verbrennungsraum abgestimmt ist. Da das Gemisch im Schichtladebetrieb nicht mehr wie beim homogen betriebenen Otto-Motor als zündfähiges Gemisch im gesamten Brennraum verteilt ist, stellt der direkteinspritzende Otto-Motor neue Anforderungen an die Zündanlage. Im geschichteten Betrieb muß die Gemischwolke zum richtigen Zeitpunkt mit der richtigen Zusammensetzung an der Zündkerze vorhanden sein, damit das Gemisch sicher entzündet werden kann. Ist die Funkendauer zu kurz kann es durch die Zyklusschwankungen der Gemischaufbereitung zu Verbrennungsaussetzern aufgrund eines zu früh oder zu spät gezündeten Zündfunkens kommen. Optimal ist daher für die Zündung eines inhomogenen Gemisches eine möglichst lange Funkenbrenndauer. Lange Funkenbrenndauern verursachen jedoch einen hohen Zündkerzenverschleiß. Um dem entgegenzuwirken kann die Funkenbrenndauer während des homogenen Betriebs des direkteinspritzenden Ottomotors stark verkürzt werden, da das Gemisch in dieser Betriebsart als sehr zündwilliges Gemisch vorliegt und damit nur sehr wenig Zündenergie für die sichere Entflammung des Gemischs benötigt. Durch die Unterscheidung zwischen einem Homogen- und einem Schichtladebetrieb können auch weitere Korrekturfaktoren einbezogen werden, so daß eine optimale Funkenbrenndauer eingestellt wird, so daß eine optimale Entflammung erfolgt, ohne die Zündkerzen zu stark zu verschleißen. Die Erfindung wird anhand eines Ausführungsbeispieles in Verbindung mit einer Figurenbeschreibung näher erläutert. Es zeigt
- Fig. 1: einen Längsschnitt durch einen Zylinder einer direkteinspritzenden Otto-Brennkraftmaschine, sowie
- Fig. 2: eine schematische Darstellung von Kennfeldern zur Einstellung der Funkendauer.

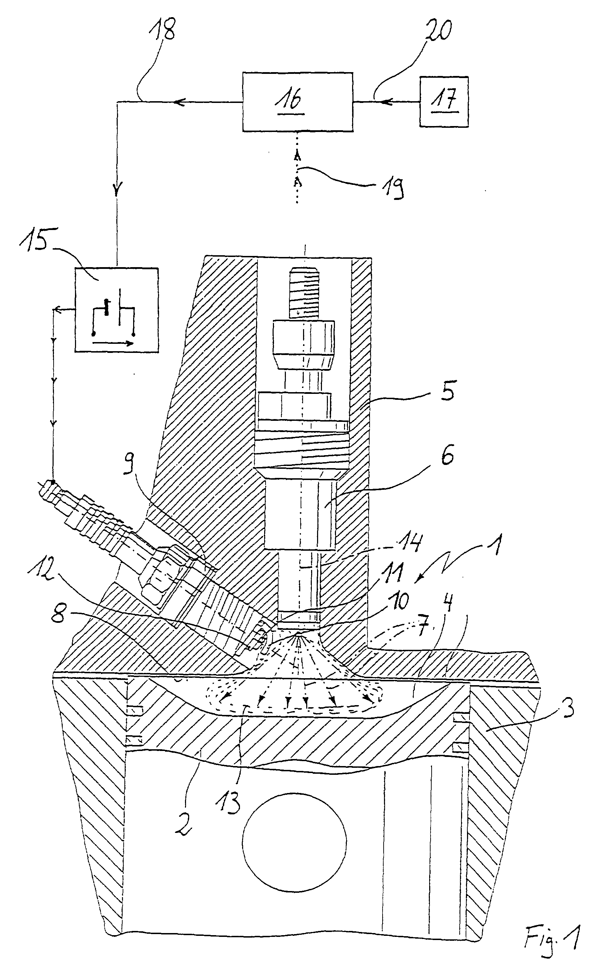

In Fig. 1 ist in einem Längsschnitt durch eine direkteinspritzende Otto-Brennkraftmaschine 1 ein Zylinder 3 dargestellt, in dem ein Kolben 2 längsbeweglich angeordnet ist und einen Brennraum 4 begrenzt. Ein Zylinderkopf 5 deckt den Zylinder 3 ab und verschließt den Brennraum 4. Im Zylinderkopf 5 ist in zentraler Position auf einer Zylinderachse 14 liegend ein Injektor 6 mit Zugang zum Brennraum 4 angeordnet, welcher zur Gemischbildung mit separat über einen nicht dargestellten Ansaugkanal zugeführter Verbrennungsluft Kraftstoff in den Brennraum einspritzt. Der Kraftstoff wird dabei durch eine Kegelstrahldüse des Injektors 6 in einem sich zum Kolben 2 aufweitenden Kegelstrahl 7 zentral in den Brennraum 4 eingespritzt. In weiten Kennfeldbereichen der Brennkraftmaschine 1 ist ein Schichtladungsbetrieb durch Kraftstoffeinspritzung während des Verdichtungstaktes im Arbeitsspiel des jeweiligen Zylinders 3 vorgesehen. Der Kegelstrahl 7 wird während des Kompressionshubes des Kolbens 2 eingespritzt, wodurch in zentraler Position im Brennraum eine geschichtete Gemischwolke 13 gebildet ist. Die Kraftstoffkonzentration nimmt dabei vom Kern der Gemischwolke 13 zum Strahlrand des Kegelstrahls 7 hin ab. Mit der Ladungsschichtung lassen sich insbesondere im Teillastbereich durch die Gemischabmagerung in großen Teilen des Brennraums 4 und der vorwiegend zentralen Bereitstellung der zu verbrennenden Kraftstoffmenge Verbrauchsvorteile erzielen.

Eine Zündkerze 9 ist derart im Zylinderkopf 5 angeordnet, daß ihre Elektroden 10,11 durch das Brennraumdach 8 in den Brennraum 4 einragen und dabei im Randbereich des Kegelstrahls 7 beziehungsweise der Gemischwolke 13 liegen. Durch die Anordnung im Strahlrandbereich wird eine Kraftstoffbenetzung der Elektroden 10,11 und die damit verbundene Bildung von Ablagerungen weitgehend verhindert, welche zu schädlichen Gleitentladungen über dem Isolatorfuß 12 der Zündkerze 9 führen. Zur Zündung der Gemischwolke 13 wird zwischen der Mittelelektrode 10 und der Masseelektrode 11, welche elektrisch mit dem Zylinderkopf 5 verbunden ist, von einer Zündanlage 15 eine elektrische Überschlagsspannung angelegt und ein Zündfunke ausgelöst. Die Zündanlage erzeugt Wechselspannung und transformiert in dem kurzen Zeitraum von etwa 12 Mikrosekunden die notwendige Überschlagsspannung und lädt die Zündspule der Zündanlage auf. Mit diesem raschen Hochspannungsaufbau können entsprechende Energiepakete in beliebiger Menge aufeinanderfolgend erzeugt werden, wodurch sich ein Zündfunke beliebiger Länge ergibt. Der schnelle Hochspannungsaufbau führt darüber hinaus zu geringen Verlusten durch Ohmschen Nebenschluß aufgrund der Verrußung der Elektroden 10,11 und des Isolatorfußes 12 und ermöglicht die Erzeugung einer großen Hochspannung. Der schnelle Hochspannungsaufbau begünstigt darüber hinaus den Funkendurchbruch zwischen den Elektroden und verhindert Gleitentladungen über den Zündisolator 12. Abhängig vom jeweiligen Betriebspunkt der Brennkraftmaschine 1 erzeugt eine Steuereinheit 16 ein Steuersignal 18 mit Aussage über die erforderliche Funkendauer, welches der Zündanlage 15 zur Veranlassung der Gemischzündung durch die Zündkerze 9 zugeführt wird. Zur Ermittlung des vorliegenden Betriebspunktes werden der Steuereinheit 16 fortlaufend ermittelte Meßdaten verschiedener Betriebsparameter 19 der Brennkraftmaschine 1 zugeführt, wie etwa Drehzahl, Betriebslast usw. und der Bestimmung der erforderlichen Funkendauer zugrundegelegt. Die Steuereinheit 16 entnimmt einem Kennfeldspeicher 17 dort abgelegte Zuordnungsinformationen 20 der für die Zündsicherheit und den optimalen Betrieb der Brennkraftmaschine im Voraus ermittelten Funkendauer zu dem vorliegenden Betriebspunkt. Es wird daher mit einem minimalen Energieaufwand die sichere Gemischentflammung durch die im Randbereich der Gemischwolke 13 liegenden Elektroden 10,11 gewährleistet. Mit der langen Funkendauer wird sichergestellt, daß die aufgrund von Brennraumströmungen beim Ladungswechsel zeitweise an den Elektroden 10,11 vorliegenden, zündfähigen Gemischvolumen vom Zündfunken erfaßt werden. Im Leerlaufbetrieb der Brennkraftmaschine 1 wird eine geringe Menge Kraftstoff in den Brennraum 4 eingespritzt, wodurch im Schichtladungsbetrieb eine lange Funkendauer von bis zu 5 Millisekunden zur Gemischzündung erforderlich ist. Das Gemisch an den Elektroden 10,11 der Zündkerze 9 ist aufgrund des geringen Kraftstoffeintrages am Rand der Gemischwolke 13 für eine Zündung zu mager, wobei jedoch die Brennraumströmung beim Ladungswechsel vorübergehend zündfähiger Gemischanteile zwischen die Elektroden 10,11 treibt, welche mit dem über die lange Funkendauer anhaltenden Zündfunken sicher entflammt wird. Mit zunehmender Last der Brennkraftmaschine erhöht sich die Einspritzmenge und eine entsprechend kürzere Funkendauer reicht zur Gemischentflammung aus. Im Vollastbetrieb der Brennkraftmaschine erfolgt eine homogene Gemischbildung, wobei aufgrund der guten Gemischbereitung nur entflammbares Gemisch zwischen den Elektroden vorliegt und eine minimale Funkendauer von etwa 0,1 Millisekunden zur Zündung ausreicht.

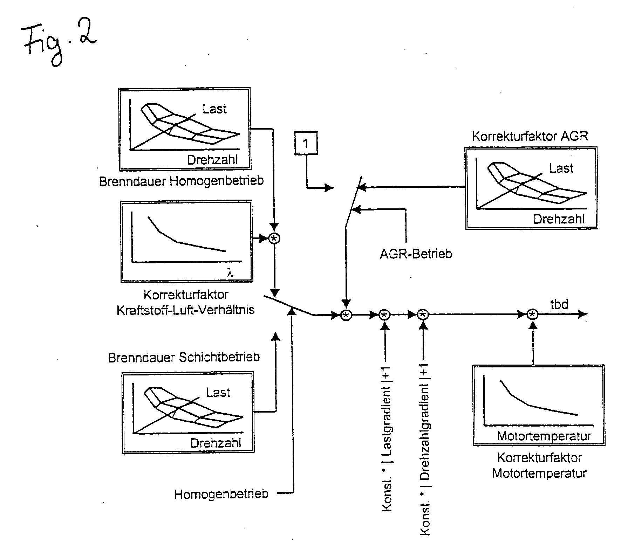

Fig. 2 zeigt eine schematische Darstellung von Kennfeldern zur Einstellung der Funkendauer, die in einer Steuereinheit abgelegt sind. Diese Kennfelder werden zuvor an einem Motor gemessen. Für Homogen- und Schichtbetrieb sind unterschiedliche Kennfelder zur Steuerung der Funkenbrenndauer tbd vorgesehen. Die Funkenbrenndauer tbd wir im Homogenbetrieb mit einem Korrekturfaktor λ, der dem Luft/Kraftstoff-Verhältnis entspricht, korrigiert. Außerdem werden sowohl die Funkenbrenndauern im Schicht- als auch im Homogenbetrieb mit einem Korrekturfaktor für die Abgasrückführung (AGR), einem Korrekturfaktor für die Motortemperatur als auch mit dem Drehzahlgradienten und dem Lastgradienten korrigiert. Die Kennfelder für Homogen- und Schichtbetrieb bestehen aus zwei Grundkennfeldern, die über Drehzahl und Last jeweils die optimalen Funkenbrenndauern im homogenen und geschichteten Motorbetrieb enthalten. Diese müssen am Prüfstand ermittelt werden. Je nach Betriebszustand des Motors wird zwischen den Funkenbrenndauern von Homogen- und Schichtladebetrieb umgeschalten. Im homogenen Motorbetrieb kann das Gemisch abgemagert oder angefettet werden. Um den dadurch erhöhten Funkenenergieanforderungen gerecht zu werden, wird die Funkenbrenndauer aus dem homogenen Grundkennfeld mit einem "Korrekturfaktor Kraftstoff-Luft-Verhältnis" multipliziert. Dieser Faktor wirkt nur auf den homogenen Motorbetrieb. Eine steuerbare externe Abgasrückführung kann als Mittel eingesetzt werden, um die Verbrennungstemperatur und damit die Nox-Emissionen eines Motors zu reduzieren. Insbesondere im geschichteten Motorbetrieb müssen die Nox-Emissionen durch motorische Maßnahmen abgesenkt werden, da eine Drei-Wege-Katalysator aufgrund des nichtstöchiometrischen Gemisches (λ>0) zur Abgasreinigung nicht eingesetzt werden kann. Die Rückführung verbrannten Gemisches aus dem Auslaßkanal in den Brennraum führt dort zu einer Verdünnung des Gemischs, was einen erhöhten Zündenergiebedarf zur Folge hat. Die externe Abgasrückführung AGR kann sowohl im homogenen, als auch im geschichteten Motorbetrieb wirken. Daher wirkt der Korrekturfaktor des AGR-Betriebs auf die jeweilige Funkenbrenndauer aus den korrigierten Grundkennfeldern. Wird der Motor mit externer Abgasrückführung betrieben, erfolgt eine Drehzahl-Last-abhängige Verlängerung der Funkenbrenndauer um einen "Korrekturfaktor AGR". Danach wird die aus den Kennfeldern ermittelte Funkenbrenndauer mit einem lastgradientenabhängigen Faktor multipliziert. Der Drehzahlgradient wird ebenfalls über einen Faktor in die Funkenbrenndauer eingerechnet. Im instationären Motorbetrieb bei Drehzahl- und Lastsprüngen kann es ebenfalls zu ungünstigen Entflammungsbedingungen kommen, weshalb auch in diesem Betriebszustand eine Verlängerung der Funkendauer sinnvoll ist. Für die Gradienten kann auch jeweils eine applizierbare Kennlinie verwendet werden. Durch die direkte Einspritzung des Kraftstoffs in den Zylinder des direkteinspritzenden Ottomotors steht selbst im homogenen Betrieb, mit früher Einspritzung, nur sehr wenig Zeit für die Gemischaufbereitung zur Verfügung. Dies führt insbesondere bei kaltem Motor zu Entflammungsproblemen, da viel Kraftstoff in den Zylinder eingebracht werden muß, um ein brennfähiges Gemisch zu erzeugen. Eine Anhebung der Funkendauer und damit der Funkenenergie bei kaltem Motor trägt daher zu einem guten Kaltstartverhalten bei. Der Einfluß der Motortemperatur auf die gewünschte Funkenbrenndauer wird ebenfalls aus einer Kennlinie entnommen. Um die Funkenbrenndauer nicht ins Unendliche wachsen zu lassen, kann die Funkenbrenndauer vor der Ausgabe an die Zündanlage noch auf einen Minimal- und/oder einen Maximalwert begrenzt werden.

## Patentansprüche

1. Verfahren zum Betrieb einer direkteinspritzenden Otto-Brennkraftmaschine, wobei ein Injektor pro Zylinder Kraftstoff in den Brennraum einspritzt und mit separat zugeführter Verbrennungsluft ein brennbares Kraftstoff/Luft-Gemisch gebildet wird, welches nach Anlegen einer elektrischen Überschlagsspannung zwischen den in den Brennraum einragenden Elektroden einer Zündkerze durch Funkenschlag gezündet wird, wobei in weiten Kennfeldbereichen der Brennkraftmaschine ein Schichtladungsbetrieb durch Kraftstoffeinspritzung während des Verdichtungstaktes im Arbeitsspiel des jeweiligen Zylinders vorgesehen ist und wobei im Vollastbetrieb ein Homogenbetrieb vorgesehen ist, wobei eine Steuereinheit ein Steuersignal mit Aussage über die Funkendauer erzeugt und der Zündanlage zuführt,
**dadurch gekennzeichnet,**
**daß** die Steuereinheit zwischen Homogen- und Schichtbetrieb unterscheidet, wobei unterschiedliche Kennfelder für Homogen- und Schichtbetrieb zur Steuerung der Funkendauer vorgesehen sind.

2. Verfahren nach Anspruch 2,
**dadurch gekennzeichnet,**
**daß** je nach Betriebszustand zwischen Homogen- und Schichtbetrieb zwischen den Kennfeldern umgeschaltet wird.

3. Verfahren nach den Ansprüchen 1 und 2,
**dadurch gekennzeichnet,**
**daß** das Kennfeld im Homogenbetrieb mit dem Kraftstoff/Luft-Verhältnis λ korrigiert wird.

4. Verfahren nach den Ansprüchen 1 bis 3,
**dadurch gekennzeichnet,**
**daß** die Kennfelder im Homogen- und im Schichtbetrieb mit einem Korrekturfaktor für die Abgasrückführung (AGR) und einem Korrekturfaktor für die Motortemperatur korrigiert werden.

5. Verfahren nach den Ansprüchen 1 bis 4,
**dadurch gekennzeichnet,**
**daß** die Funkenbrenndauer vor der Ausgabe an die Zündanlage auf einen Minimal- und/oder einen Maximalwert begrenzt wird.
